(19) Europäisches Patentamt / European Patent Office / Office européen des brevets

(11) **EP 3 869 419 A1**

(12) **EUROPEAN PATENT APPLICATION**

(43) Date of publication:
**25.08.2021 Bulletin 2021/34**

(51) Int Cl.:
**G06N 5/00** (2006.01)          **G06N 10/00** (2019.01)
**G06Q 10/04** (2012.01)

(21) Application number: **20214575.1**

(22) Date of filing: **16.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2020 JP 2020026603**

(71) Applicant: **FUJITSU LIMITED**
**Kanagawa 211-8588 (JP)**

(72) Inventor: **Shibasaki, Takayuki**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING METHOD, INFORMATION PROCESSING APPARATUS, AND INFORMATION PROCESSING PROGRAM**

(57)    An information processing method includes generating a second state variable, based on fixed portion information indicating a first state variable among a plurality of state variables included in a first evaluation function representative of energy of an Ising model, generating a second evaluation function by adding, to the first evaluation function, a function that includes the first state variable and the second state variable, becomes a constant value when the first state variable changes from a first initial value, and becomes 0 when the first state variable does not change from the first initial value, and outputting information on the second evaluation function, the first initial value, and a second initial value of the second state variable.

FIG. 1

**Description**

[Technical Field]

The embodiments discussed herein are related to an information processing method, an information processing apparatus, and an information processing program.

[Background Art]

As an apparatus that calculates a large-scale discrete optimization problem which is not easily handled by a Neumann-type computer, there is an Ising apparatus (which is also referred to as a Boltzmann machine) using an Ising type evaluation function (which is also referred to as an energy function or the like) (refer to, for example, PTLs 1 and 2).
In calculation by the Ising apparatus, a problem to be calculated is replaced with an Ising model which is a model representative of a behavior of a spin of a magnetic body. Further, based on a Markov chain Monte Carlo method such as a simulated annealing method or a replica-exchange method (which is also referred to as an exchange Monte Carlo method), a search for a state (optimum solution) that minimizes a value of an Ising model type evaluation function (corresponding to energy of the Ising model) is performed. Further, a method applying quantum annealing has also been known (refer to, for example, PTL 3).
Meanwhile, in a linear programming relaxation problem or the like which is one of optimization problems, a method (hereinafter, referred to as a variable fixing method) of fixing some of variables to 0 or 1 and searching for an optimum solution for the remaining variables is performed. By fixing values of some of state variables, the number of combinations of values of variables to be searched is reduced, and a reduction in search time may be expected.

[Citation List]

[Patent Literature]

[PTL 1] Japanese Laid-open Patent Publication No. 2018-206127
[PTL 2] International Publication Pamphlet No. WO 2017/017807
[PTL 3] Japanese National Publication of International Patent Application No. 2016-531343

[Summary of Invention]

[Technical Problem]

When the variable fixing method is used to search for an optimum solution, it may not be possible to determine which of 0 or 1 is used to fix some of variables. Therefore, when searching for an optimum solution, trials for various fixed patterns with different fixed values may be performed.
In a method of generating input information for an Ising apparatus in the related art, since an evaluation function is regenerated for each fixed pattern, there is a problem that it takes time to search for an optimum solution for various fixed patterns.
An object of one aspect of the embodiments is to provide an information processing method, an information processing apparatus, and a program capable of speeding up a search for an optimum solution for various fixed patterns.

[Solution to Problem]

In one proposal, there is provided an information processing method executed by a computer. The information processing method includes generating a second state variable, based on fixed portion information indicative of a first state variable among a plurality of state variables included in a first evaluation function representative of energy of an Ising model, that is not included in the plurality of state variables, generating a second evaluation function by adding, to the first evaluation function, a function that includes the first state variable and the second state variable, becomes a positive constant value in a case where the first state variable changes from a first initial value, and becomes 0 in a case where the first state variable does not change from the first initial value, and outputting information on the second evaluation function, the first initial value, and a second initial value of the second state variable to an Ising apparatus that searches for an optimum solution.
Further, in one proposal, there is provided an information processing apparatus.

Further, in one proposal, there is provided an information processing program.

[Effects of Invention]

According to one aspect of the embodiments, it is possible to speed up a search for an optimum solution for various fixed patterns.

[Brief Description of Drawings]

FIG. 1 is a diagram illustrating an example of an information processing system that includes an information processing apparatus and an information processing method according to a first embodiment;
FIG. 2 is a block diagram illustrating a hardware example of an information processing apparatus according to a second embodiment;
FIG. 3 is a block diagram illustrating a functional example of an information processing apparatus;
FIG. 4 is a diagram illustrating an example of a method for determining a value of F;
FIG. 5 is a diagram illustrating a flow of an example of an information processing method according to the second embodiment;
FIG. 6 is a diagram illustrating a relationship between a visiting city and a visiting order, and a state variable; and
FIG. 7 is a diagram illustrating exemplary designations of fixed patterns.

[Description of Embodiments]

Hereinafter, the embodiments will be described in detail with reference to the drawings.

(First Embodiment)

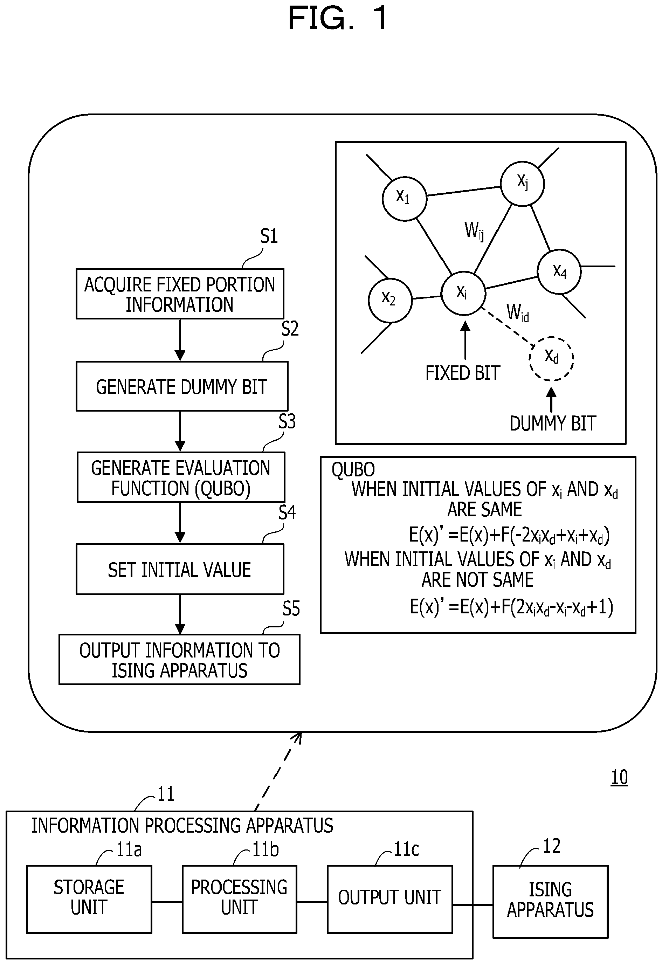

FIG. 1 is a diagram illustrating an example of an information processing system that includes an information processing apparatus and an information processing method according to a first embodiment.
An information processing system 10 includes an information processing apparatus 11 and an Ising apparatus 12.
The information processing apparatus 11 includes a storage unit 11a, a processing unit 11b, and an output unit 11c.
The storage unit 11a is a volatile storage device such as a randomaccess memory (RAM) or a non-volatile storage device such as a hard disk drive (HDD) and a flash memory, for example.
The storage unit 11a stores a program for performing processing described later. The storage unit 11a may store, for example, information indicative of an optimization problem to be calculated, and formulation information for formulating the optimization problem into an evaluation function that represents energy of the Ising model.
The above-described evaluation function is defined, for example, as in the following Equation (1).
[Equation 1]

$$ E(x) = -\sum_{\langle i,j \rangle}^{N} W_{ij} x_i x_j - \sum_{i=1}^{N} b_i x_i + c \qquad (1) $$

A first term on a right side adds up the products of values of two state variables and a weight coefficient without missing and overlapping among all combinations of two state variables selectable from N state variables. $x_i$ is an i-th state variable. $x_j$ is a j-th state variable. $W_{ij}$ is a weight coefficient indicative of a magnitude (for example, a strength of combining) of interaction between $x_i$ and $x_j$ (refer to FIG. 1). In this case, $W_{ii} = 0$. Further, the relationship $W_{ij} = W_{ji}$ is often satisfied (that is, a coefficient matrix with the weight coefficient is often a symmetric matrix).
A second term on the right side is a sum of products of bias coefficients with respect to each of all state variables and values of the state variables. $b_i$ represents a bias coefficient for the i-th state variable. c is a constant.
For example, "-1" of a spin in the Ising model corresponds to a value "0" of the state variable. "+1" of the spin in the Ising model corresponds to a value "1" of the state variable. Therefore, the state variable may be called "bit" having a value of 0 or 1.

The combination of the values of the state variables that minimizes a value of Equation (1) is a solution (optimum solution) of the problem.

Further, the storage unit 11a may store fixed portion information representative of a state variable (hereinafter, referred to as a fixed bit) of which a value is fixed among a plurality of state variables included in the evaluation function, or a fixed pattern indicative of which value is used for fixing. Further, the storage unit 11a may store the number of parallel searches in a case where the Ising apparatus 12 performs a parallel search, information on a search end condition, and a control parameter such as a change schedule of a temperature parameter in a case where the Ising apparatus 12 performs a simulated annealing method.

The above-described various kinds of information stored in the storage unit 11a may be input from an outside of the information processing apparatus 11, or may be generated in the information processing apparatus 11 based on data input by a user operating an input device (not illustrated), for example.

The processing unit 11b is realized by a processor that is hardware such as a central processing unit (CPU), a graphics processing unit (GPU), and a digital signal processor (DSP). However, the processing unit 11b may include an application-specific electronic circuit such as an application specific integrated circuit (ASIC) and a field-programmable gate array (FPGA). The processing unit 11b executes a program stored in the storage unit 11a to cause the information processing apparatus 11 to perform the following processing. Note that, the processing unit 11b may be a set of a plurality of processors.

The processing unit 11b generates information to be input to the Ising apparatus 12 by the following processing. The processing unit 11b acquires the fixed portion information from, for example, the storage unit 11a, and generates a state variable which is not included in the evaluation function of Equation (1) (hereinafter, referred to as a dummy bit) based on the fixed portion information. FIG. 1 illustrates a dummy bit ($x_d$) generated in a case where $x_i$ is a fixed bit. Note that, in a case where there are a plurality of fixed bits, a dummy bit is generated for each of the plurality of fixed bits. Note that, the processing unit 11b may acquire the fixed portion information input from the outside of the information processing apparatus 11.

The processing unit 11b further generates E(x)' by adding, to the above-described E(x), a function that includes a fixed bit and a dummy bit, becomes a positive constant value (hereinafter, referred to as F) in a case where the fixed bit changes from an initial value, and becomes 0 in a case where the fixed bit does not change from the initial value. E(x)' is represented in a quadratic unconstrained binary optimization (QUBO) format (hereinafter, E(x)' may be referred to as QUBO). Note that, the information (weight coefficient or bias coefficient) of E(x) may be generated by the processing unit 11b based on the information on the optimization problem and the formulation information, or may be input from the outside of the information processing apparatus 11.

Any of two types of functions to be added to the above-described E(x) is used depending on a relationship between an initial value of a fixed bit and an initial value of a dummy bit.

In a case where the initial value of the fixed bit ($x_i$) and the initial value of the dummy bit ($x_d$) are the same (in a case where ($x_i$, $x_d$) = (0, 0) or (1, 1)), the function to be used is $F(-2x_ix_d + x_i + x_d)$. In this case, in initial value setting processing described later, since $x_d = 0$ is set when $x_i = 0$ is set, a relationship $F(-2x_ix_d + x_i + x_d) = F$ is satisfied in a case where $x_i$ changes from the initial value of 0 to 1. Note that, in a case where $x_i$ does not change from the initial value of 0, the relationship $F(-2x_ix_d + x_i + x_d) = 0$ is satisfied. Further, in the initial value setting processing, since $x_d = 1$ is set when $x_i = 1$ is set, the relationship $F(-2x_ix_d + x_i + x_d) = F$ is also satisfied in a case where $x_i$ changes from the initial value of 1 to 0. Note that, in a case where $x_i$ does not change from the initial value of 0, the relationship $F(-2x_ix_d + x_i + x_d) = 0$ is satisfied.

On the other hand, in a case where the initial value of the fixed bit ($x_i$) and the initial value of the dummy bit ($x_d$) are not the same (in a case where ($x_i$, $x_d$) = (0, 1) or (1, 0)), the function to be used is $F(2x_ix_d - x_i - x_d + 1)$. In this case, in the initial value setting processing described later, since $x_d = 1$ is set when $x_i = 0$ is set, a relationship $F(2x_ix_d - x_i - x_d + 1) = F$ is satisfied in a case where $x_i$ changes from the initial value of 0 to 1. Note that, in a case where $x_i$ does not change from the initial value of 0, the relationship $F(2x_ix_d - x_i - x_d + 1) = 0$ is satisfied. Further, in the initial value setting processing, since $x_d = 0$ is set when $x_i = 1$ is set, the relationship $F(2x_ix_d - x_i - x_d + 1) = F$ is also satisfied in a case where $x_i$ changes from the initial value of 1 to 0. Note that, in a case where $x_i$ does not change from the initial value of 0, the relationship $F(2x_ix_d - x_i - x_d + 1) = 0$ is satisfied.

As described above, the above-described two types of functions are F in any case when $x_i$ changes from the initial value, and are 0 in any case when $x_i$ remains as the initial value. Note that, in a case where there are a plurality of sets of the fixed bits and the dummy bits, the above-described function is added to E(x) for each of the plurality of sets.

Further, the processing unit 11b sets an initial value for a fixed bit in accordance with a fixed pattern designated by the user, for example. In a case where there is one fixed bit, the fixed pattern may be designated as two patterns of a pattern in which $x_i$ is set to 1 and a pattern in which $x_i$ is set to 0, and in a case where there are a plurality of fixed bits, more patterns may be designated.

Further, in the setting of the initial value, the processing unit 11b sets the initial value of $x_d$ corresponding to $x_i$ depending on which of the above-described two types of functions is adopted. In a case where $F(-2x_ix_d + x_i + x_d)$ is

adopted, the same value as the initial value of $x_i$ is set as the initial value of $x_d$. In a case where $F(2x_i x_d - x_i - x_d + 1)$ is adopted, a value different from the initial value of $x_i$ is set as the initial value of $x_d$. Note that, the processing unit 11b may set initial values for all the state variables that include the fixed bit.

Further, the processing unit 11b outputs QUBO information, the set initial value, and information that includes various kinds of control parameters to the Ising apparatus 12 by using the output unit 11c.

Note that, the addition of the above-described function to $E(x)$ is equivalent to, in a case of the first function, adding $W_{id}$ with a value of -2F, which is a weight coefficient of $x_i$ and $x_d$ as one of $W_{ij}$ in Equation (1), adding F to the bias coefficient for $x_i$, and adding F as the bias coefficient for $x_d$. Further, the addition of the function to $E(x)$ is equivalent to, in a case of the second function, adding $W_{id}$ with a value of 2F, which is a weight coefficient of $x_i$ and $x_d$ as one of $W_{ij}$, adding -F to the bias coefficient for $x_i$, adding -F as the bias coefficient for $x_d$, and adding F to the constant c. Therefore, the information on the functions to be added may be included in the information on $E(x)$ and output to the Ising apparatus 12.

The output unit 11c is, for example, a transceiver circuit that performs communication according to an interface standard such as a Peripheral Component Interconnect (PCI) Express, and the like. The output unit 11c outputs (transmits) the information to the Ising apparatus 12 based on the control by the processing unit 11b.

Based on the information output by the output unit 11c, the Ising apparatus 12 searches for a combination (optimum solution) of the values of the state variables that minimizes the value of $E(x)'$. At the time of searching, in a case where the fixed bit changes, the energy (value of $E(x)'$) increases by F with respect to $E(x)$. By setting F to a relatively large positive constant value, a change in the value of the fixed bit is suppressed, and the value may be set to the fixed value. An example of a method for determining a value of F will be described later. Note that, the Ising apparatus 12 may perform searches for a plurality of different fixed patterns in parallel.

The Ising apparatus 12 is, for example, an apparatus that performs the above-described search by performing a Markov chain Monte Carlo method such as a simulated annealing method and a replica-exchange method using a digital circuit. Further, the Ising apparatus 12 may be an apparatus that performs the above-described search by performing quantum annealing using a superconducting circuit, or may be a processor such as a CPU, a GPU, and a DSP that performs the above-described search by executing software.

Note that, the Ising apparatus 12 may be provided inside the information processing apparatus 11.

FIG. 1 illustrates a flow of an example of an information processing method by the information processing apparatus 11.

The processing unit 11b acquires the fixed portion information (step S1), and generates a dummy bit corresponding to the fixed bit based on the acquired fixed portion information (step S2).

Thereafter, the processing unit 11b generates the QUBO as described above (step S3), and sets an initial value for the fixed bit, for example, in accordance with the fixed pattern designated by the user (step S4). Further, the processing unit 11b outputs the QUBO information, the set initial value, and information that includes various kinds of control parameters to the Ising apparatus 12 by using the output unit 11c (step S5).

According to the information processing method of the first embodiment, by generating the QUBO as described above, it is possible to search (multipoint search) for various fixed patterns only by changing the initial values of the fixed bit and the dummy bit.

As a method of performing the multipoint search, it is considered to prepare information indicative of the optimization problem for each of the various fixed patterns, but in this case, the QUBO has to be generated for each fixed pattern. Further, since the data amount of the weight coefficient of the QUBO or the bias coefficient is large, it is difficult to set the QUBO information of the plurality of fixed patterns in the Ising apparatus 12. Therefore, even when the Ising apparatus 12 is capable of performing the parallel search, for example, the Ising apparatus 12 is only capable of performing search processing for one fixed pattern at a time.

Further, as a method of fixing a value of a certain state variable, it is considered to set a large bias value for the variable, but a sign or the like of the set bias value changes depending on whether the variable is fixed to 0 or 1. For example, in a case where $x_i$ is fixed to 0, $b_i$ is set to a large negative value, and in a case where $x_i$ is fixed to 1, $b_i$ is set to a large positive value and the increase from the original $b_i$ is added to the constant (c). That is, also in this case, in order to perform the multipoint search, a plurality of QUBOs have to be generated in accordance with the fixed pattern, and for the same reason as described above, the Ising apparatus 12 is only capable of performing search processing for one fixed pattern at a time, for example.

In contrast, in the information processing method according to the first embodiment, there is no need to regenerate the QUBO for each fixed pattern. A plurality of fixed patterns may be supported by simply changing the initial values of the fixed bit and the dummy bit. Since the QUBO is generated only once, it is possible to speed up the search for the optimum solution for various fixed patterns.

Further, even when there are a plurality of fixed patterns, the number of types of the QUBO information to be sent to the Ising apparatus 12 is one. Therefore, by supplying a plurality of types of initial values of the fixed bit and the dummy bit to the Ising apparatus 12, it is possible for the Ising apparatus 12 to perform the parallel searches for the plurality of fixed patterns with the one type of QUBO information. Accordingly, solution candidates for the plurality of fixed patterns are obtained in one search processing by the Ising apparatus 12.

(Second Embodiment)

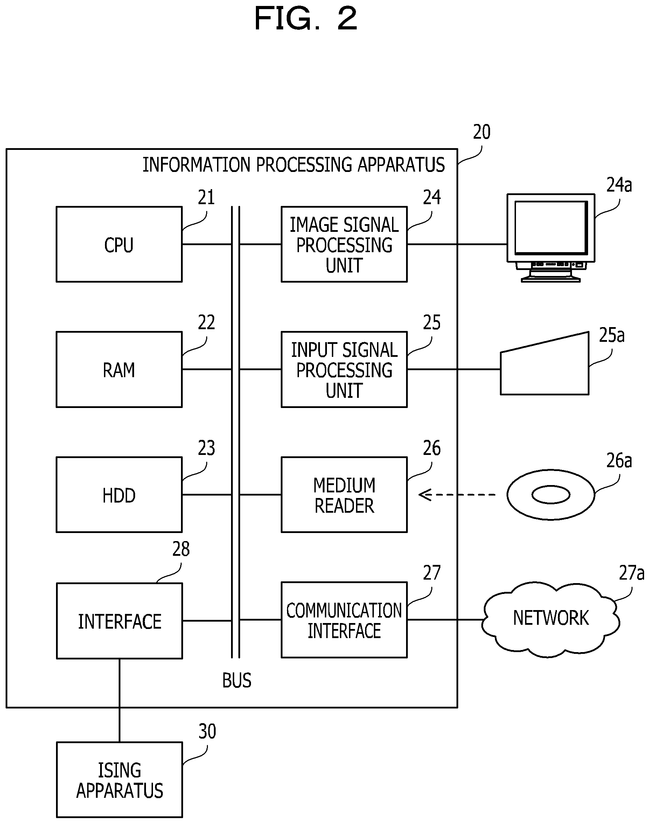

FIG. 2 is a block diagram illustrating a hardware example of an information processing apparatus according to a second embodiment.

An information processing apparatus 20 is a computer, for example, and has a CPU 21, a RAM 22, an HDD 23, an image signal processing unit 24, an input signal processing unit 25, a medium reader 26, a communication interface 27, and an interface 28. The above-described units are coupled to a bus.

The CPU 21 is a processor that includes an arithmetic circuit that executes program commands. The CPU 21 loads at least a part of a program and data stored in the HDD 23 into the RAM 22 and executes the program. Note that, the CPU 21 may include a plurality of processor cores, the information processing apparatus 20 may include a plurality of processors, and the processes described below may be executed in parallel by using a plurality of processors or processor cores.

The RAM 22 is a volatile semiconductor memory that temporarily stores a program executed by the CPU 21 and data used for computation by the CPU 21. Note that, the information processing apparatus 20 may include a type of memory other than the RAM, and may include a plurality of memories.

The HDD 23 is a non-volatile storage device that stores software programs such as an operating system (OS), middleware, and application software, and data. The program includes, for example, a program that causes the information processing apparatus 20 to execute processing of generating input information for an Ising apparatus 30. Note that, the information processing apparatus 20 may include other types of storage devices such as a flash memory and a solid-state drive (SSD), and may include a plurality of non-volatile storage devices.

The image signal processing unit 24 outputs an image to a display 24a coupled to the information processing apparatus 20 in accordance with a command from the CPU 21. The display 24a may be a cathode ray tube (CRT) display, a liquid crystal display (LCD), a plasma display panel (PDP), an organic electro-luminescence (OEL) display, or the like.

The input signal processing unit 25 acquires an input signal from an input device 25a coupled to the information processing apparatus 20 and outputs the input signal to the CPU 21. As the input device 25a, a pointing device such as a mouse, a touch panel, a touchpad, and a trackball, a keyboard, a remote controller, a button switch, and the like may be used. Further, a plurality of types of input devices may be coupled to the information processing apparatus 20.

The medium reader 26 is a reading device that reads a program or data recorded on a recording medium 26a. As the recording medium 26a, for example, a magnetic disk, an optical disk, a magneto-optical disk (MO), a semiconductor memory, and the like may be used. The magnetic disk includes a flexible disk (FD) and an HDD. The optical disk includes a compact disc (CD) and a digital versatile disc (DVD).

The medium reader 26 copies a program or data read from the recording medium 26a to another recording medium such as the RAM 22 and the HDD 23, for example. The read program is executed by the CPU 21, for example. Note that, the recording medium 26a may be a portable recording medium or may be used to distribute the program or data. Further, the recording medium 26a or the HDD 23 may be referred to as a computer-readable recording medium.

The communication interface 27 is an interface that is coupled to a network 27a and that communicates with another information processing apparatus via the network 27a. The communication interface 27 may be a wired communication interface coupled to a communication device such as a switch via a cable, or may be a wireless communication interface coupled to a base station via a wireless link.

The interface 28 is coupled to the Ising apparatus 30 and exchanges data between the CPU 21 and the Ising apparatus 30. The interface 28 may be a wired communication interface such as a Peripheral Component Interconnect (PCI) Express or may be a wireless communication interface.

Note that, the information processing apparatus 11 illustrated in FIG. 1 may also be realized by using, for example, hardware as described above.

Based on the input information, the Ising apparatus 30 searches for a combination of the values of the state variables that minimizes the value of the QUBO. At the time of searching, in a case where the fixed bit changes, the energy of the QUBO increases by F with respect to $E(x)$. Note that, in the following description, it is assumed that the Ising apparatus 30 performs searches for a plurality of different fixed patterns simultaneously in parallel.

The Ising apparatus 30 is, for example, an apparatus that performs the above-described search by performing a Markov chain Monte Carlo method such as a simulated annealing method or a replica-exchange method using a digital circuit. Further, the Ising apparatus 30 may be an apparatus that performs the above-described search by performing quantum annealing using a superconducting circuit, or may be a processor such as a CPU, a GPU, and a DSP that performs the above-described search by executing software.

Note that, the Ising apparatus 30 may be provided inside the information processing apparatus 20.

Next, functions and processing procedures of the information processing apparatus 20 will be described.

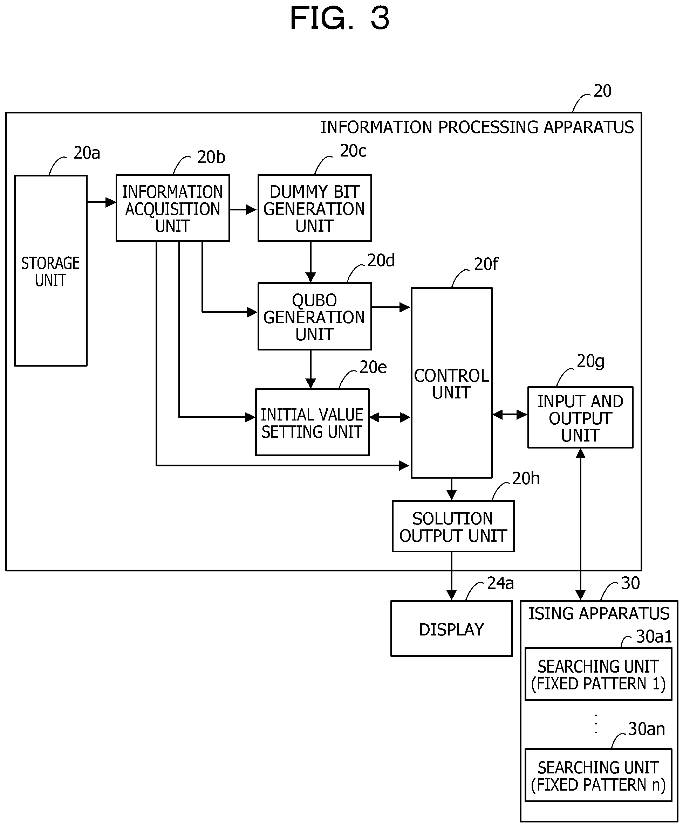

FIG. 3 is a block diagram illustrating a functional example of the information processing apparatus.

The information processing apparatus 20 includes a storage unit 20a, an information acquisition unit 20b, a dummy bit generation unit 20c, a QUBO generation unit 20d, an initial value setting unit 20e, a control unit 20f, an input and output unit 20g, and a solution output unit 20h. The storage unit 20a may be implemented by using a storage area secured in the RAM 22 or the HDD 23 in FIG. 2, for example. The information acquisition unit 20b, the dummy bit generation unit 20c, the QUBO generation unit 20d, the initial value setting unit 20e, and the control unit 20f are examples of the processing unit 11b in FIG. 1, and may be implemented by using, for example, program modules executed by the CPU 21 in FIG. 2. The input and output unit 20g may be implemented by using, for example, the interface 28 in FIG. 2, and the solution output unit 20h may be implemented by using, for example, the image signal processing unit 24 in FIG. 2.

The storage unit 20a stores, for example, information indicative of an optimization problem to be calculated, formulation information, fixed portion information, the number of parallel searches, information on a search end condition, a control parameter, and the like.

The information acquisition unit 20b acquires the above-described various kinds of information from the storage unit 20a. Note that, the information acquisition unit 20b may acquire the above-described various kinds of information input from the outside of the information processing apparatus 20.

The dummy bit generation unit 20c generates a dummy bit based on the fixed portion information acquired by the information acquisition unit 20b. In a case where there are a plurality of fixed bits, a dummy bit is generated for each of the plurality of fixed bits. Note that, the information of the generated dummy bit may be stored in the storage unit 20a.

The QUBO generation unit 20d generates, as the QUBO, $E(x)'$ by adding a function that becomes a positive constant value (F) in a case where the fixed bit changes from the initial value to $E(x)$ in Expression (1). Note that, information on the generated QUBO may be stored in the storage unit 20a.

The initial value setting unit 20e sets an initial value for the fixed bit, for example, in accordance with the fixed pattern designated by the user. Also, in a case where $F(-2x_ix_d + x_i + x_d)$ is adopted as the above-described function, the initial value setting unit 20e sets the same value as the initial value of the fixed bit as the initial value of the dummy bit. In a case where $F(2x_ix_d - x_i - x_d + 1)$ is adopted as the above-described function, the initial value setting unit 20e sets a value different from the initial value of the fixed bit as the initial value of the dummy bit. Note that, the initial value setting unit 20e may set initial values for all the state variables that include the fixed bit. Further, the set initial values may be stored in the storage unit 20a.

Here, an example of a method for determining the value of F will be described.

In a case where both the initial value of $x_i$ which is the fixed bit and the initial value of $x_d$ which is the corresponding dummy bit are set to 0, the generated QUBO is $E(x)' = E(x) + F(-2x_ix_d + x_i + x_d)$. The energy change ($\Delta E_i$) when $x_i$ (or $x_d$) changes from 0 to 1 may be represented by the following Equation (2).

[Equation 2]

$$\Delta E_i = -\sum_{j=1}^{N} W_{ij}x_j - b_i + F \qquad (2)$$

When $\Delta E_i > 0$, the Ising apparatus 30 finds the lower energy state as a solution, so that $x_i$ (or $x_d$) does not finally become 1. Therefore, the value of F may be determined so as to satisfy the following Equation (3).

[Equation 3]

$$F > \sum_{j=1}^{N} W_{ij}x_j + b_i \qquad (3)$$

Alternatively, in order to simplify the calculation, the value of F may be determined so as to satisfy the following Equation (4).

[Equation 4]

$$F \geq \sum_{j=1}^{N} |W_{ij}| + b_i \qquad (4)$$

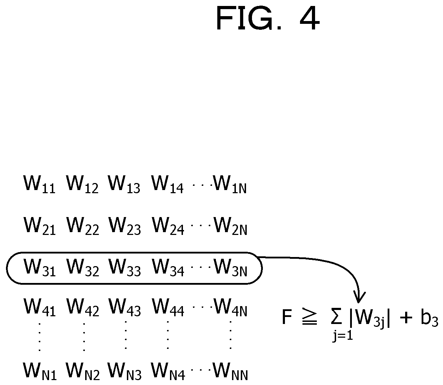

FIG. 4 is a diagram illustrating an example of a method for determining the value of F. FIG. 4 illustrates a weight coefficient matrix based on the weight coefficient ($W_{ij}$) in Equation (1).

For example, in a case where $x_3$ is a fixed bit, F may be equal to or larger than the value obtained by adding $b_3$, which is the bias coefficient for $x_3$, to the sum of absolute values of $W_{31}$, $W_{32}$, ..., $W_{3N}$.

Note that, F may be determined by the above-described method for each fixed bit, or the largest value among the values of F determined for each fixed bit may be adopted for F.

Referring back to FIG. 3, the control unit 20f causes the initial value setting unit 20e to set the initial value based on the number of parallel searches by the Ising apparatus 30 and the number of fixed patterns. In a case where the number of fixed patterns is larger than the number of parallel searches, for example, the control unit 20f sets the initial values for the number of the fixed bits for the fixed patterns corresponding to the number of parallel searches.

Further, the control unit 20f causes the input and output unit 20g to output the QUBO information, the initial value, and the information that includes various kinds of control parameters to the Ising apparatus 30.

Moreover, the control unit 20f selects a solution to be output, from among the solution candidates for each of the fixed patterns output by the Ising apparatus 30, and causes the solution output unit 20h to output the selected solution. For example, the control unit 20f determines a solution candidate that minimizes the value (energy) of Equation (1) among the solution candidates for each of the fixed patterns output by the Ising apparatus 30, and selects the solution candidate as a solution. In this case, for example, the control unit 20f calculates energy based on the solution candidate, the weight coefficient of Equation (1), and the bias coefficient. Note that, in a case where the Ising apparatus 30 also outputs the corresponding energy together with the solution candidate, the control unit 20f may not calculate the energy. Further, the control unit 20f may select a predetermined number of solution candidates in ascending order of energy from among the solution candidates for each of the fixed patterns and cause the solution output unit 20h to output the selected solution candidates.

The input and output unit 20g outputs the QUBO information, the initial value, and the information that includes various kinds of control parameters to the Ising apparatus 30 under the control of the control unit 20f. Further, the solution candidates output by the Ising apparatus 30 are input to the input and output unit 20g. The input solution candidates are supplied to the control unit 20f. Note that, in a case where the Ising apparatus 30 outputs the energy corresponding to the solution candidate, the input and output unit 20g also inputs the energy, and supplies the energy to the control unit 20f.

The solution output unit 20h outputs the solution selected by the control unit 20f or the solution candidate to the display 24a under the control of the control unit 20f. Note that, the solution output unit 20h may output the solution selected by the control unit 20f or the solution candidate to another information processing apparatus or storage device.

The Ising apparatus 30 includes a plurality of searching units 30a1 to 30an as illustrated in FIG. 3. In each of the searching units 30a1 to 30an, it is possible to search for different fixed patterns (for example, fixed patterns 1, and n) simultaneously in parallel.

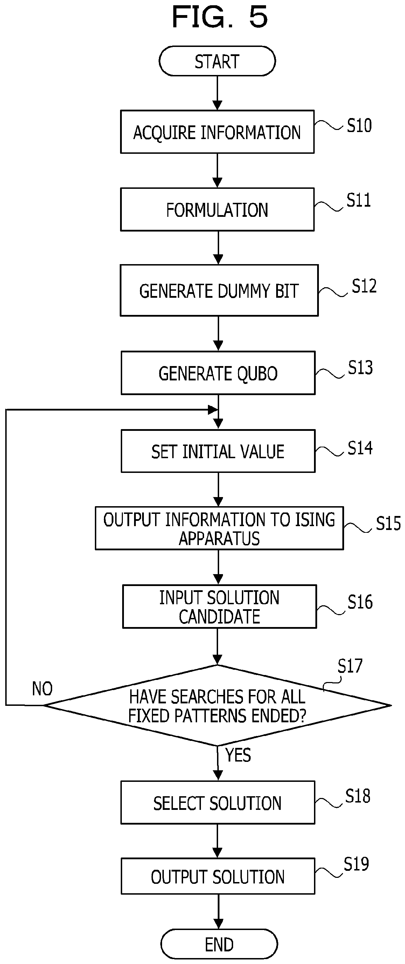

FIG. 5 is a diagram illustrating a flow of an example of an information processing method according to the second embodiment.

(S10) The information acquisition unit 20b acquires, for example, information indicative of an optimization problem to be calculated, formulation information, fixed portion information, the number of parallel searches, information of a search end condition, and information such as a control parameter, from the storage unit 20a or the outside of the information processing apparatus 20.

(S11) The QUBO generation unit 20d formulates the optimization problem, for example, as in Equation (1) based on the information indicative of the optimization problem to be calculated and the formulation information.

(S12) The dummy bit generation unit 20c generates a dummy bit corresponding to the fixed bit based on the fixed portion information. In a case where there are a plurality of fixed bits, a dummy bit is generated for each of the plurality of fixed bits.

(S13) The QUBO generation unit 20d generates $E(x)' = E(x) + F(-2x_ix_d + x_i + x_d)$ as the QUBO in a case where the initial values of the fixed bit and the dummy bit are the same. The QUBO generation unit 20d generates $E(x)' = E(x) + F(2x_ix_d - x_i - x_d + 1)$ as the QUBO in a case where the initial values of the fixed bit and the dummy bit are not the same.

(S14) The initial value setting unit 20e sets the initial value for the fixed bit, for example, in accordance with the fixed pattern designated by the user. Also, in a case where $F(-2x_ix_d + x_i + x_d)$ is adopted as the above-described function, the initial value setting unit 20e sets the same value as the initial value of the fixed bit as the initial value of the dummy bit. In a case where $F(2x_ix_d - x_i - x_d + 1)$ is adopted as the above-described function, the initial value setting unit 20e sets a value different from the initial value of the fixed bit as the initial value of the dummy bit. In a case where the number of fixed patterns is larger than the number of parallel searches by the Ising apparatus 30, the initial value setting unit 20e sets the initial values for the number of fixed patterns equal to or less than the number of parallel searches, under the control of the control unit 20f.

(S15) The input and output unit 20g outputs the QUBO information, the initial value, and the information that includes various kinds of control parameters to the Ising apparatus 30.

(S16) When the search processing in the Ising apparatus 30 ends, the solution candidate is input to the input and output unit 20g.

(S17) The control unit 20f determines whether or not the searches for all the fixed patterns ended. In a case where it is determined that the searches for all the fixed patterns have not ended, the processing from step S14 is performed again. In this case, the initial value setting unit 20e sets the initial value for the fixed bit in accordance with the fixed pattern for which the search is not performed, under the control of the control unit 20f. In a case where it is determined that the searches for all the fixed patterns ended, the processing of step S18 is performed.

(S18) The control unit 20f selects, for example, a solution candidate that minimizes the energy as a solution from the solution candidates for each of the fixed patterns output by the Ising apparatus 30.

(S19) The solution output unit 20h causes the display 24a to display the solution selected by the control unit 20f by outputting the solution selected by the control unit 20f, under the control of the control unit 20f. Thus, the processing in the information processing apparatus 20 ends.

Note that, the order of the above-described processing is an example and the processing order may be changed as appropriate.

Hereinafter, an application example to a traveling salesman problem will be described.

The evaluation function of the traveling salesman problem may be represented by, for example, the following Equation (5).

[Equation 5]

$$E = \sum_{t,i,j} d_{ij} X_{ti} X_{(t+1)j} + \alpha \sum_{t} \left( \sum_{i} X_{ti} - 1 \right)^2$$

$$+ \beta \sum_{i} \left( \sum_{t} X_{ti} - 1 \right)^2 \qquad (5)$$

$X_{ti}$ is a state variable that is 1 in a case where the visiting order is t-th and there is a salesman in a city i, and is 0 in a case where the visiting order is t-th and there is no salesman in the city i. $d_{ij}$ is a distance between the city i and a city j. The first term on the right side of Equation (5) represents a total distance, the second term is a constraint term representative of a constraint condition that the salesman visits only one city in the same visiting order, and the third term is a constraint term representative of a constraint condition that the salesman visits all cities once. $\alpha$ and $\beta$ are constants of the constraint terms.

$X_{ti}$ may be replaced with $x_i$ in Equation (1), and Equation (5) may be transformed into Equation (1).

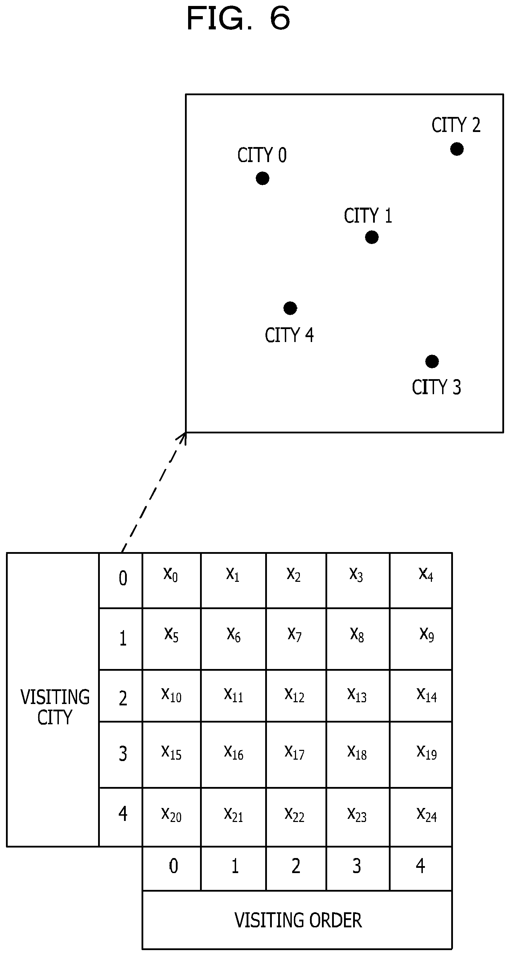

FIG. 6 is a diagram illustrating a relationship between the visiting city, the visiting order, and the state variable.

In the traveling salesman problem for five cities, 25 state variables ($x_0$ to $x_{24}$) are used. Note that, in Equation (1), i of $x_i$ is 1 to N, but in a case where the example of FIG. 6 is applied, i = 0 to 24.

For example, in a case where $x_0$ is 1, it indicates that the salesman is in the city 0 (start point) in the 0th order, and in a case where $x_6$ is 1, it indicates that the salesman is in the city 1 in the first order.

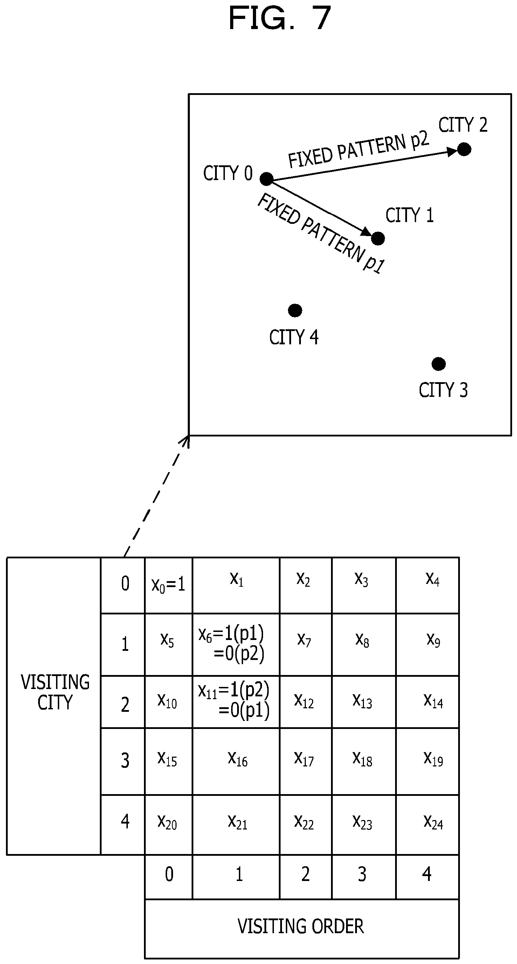

FIG. 7 is a diagram illustrating exemplary designations of fixed patterns.

In a case where the start point of the salesman is the city 0, $x_0$ may be fixed to 1. This may be realized by adding $F(x_0 + 1)$ to $E(x)$ in Equation (1).

FIG. 7 illustrates exemplary designations of two fixed patterns of a fixed pattern p1 in which a first visiting city is the city 1, and a fixed pattern p2 in which a first visiting city is the city 2.

In this case, $x_6$ and $x_{11}$ are the fixed bits represented by the fixed portion information, and a dummy bit ($x_{d6}$) of $x_6$ and a dummy bit ($x_{d11}$) of $x_{11}$ are generated. In a case where the initial values of $x_{d6}$ and $x_{d11}$ are the same as the initial values of the corresponding fixed bits, the generated QUBO is a function in which $F(-2x_6x_{d6} + x_6 + x_{d6} - 2x_{11}x_{d11} + x_{11} + x_{d11})$ is added to $E(x) + F(x_0 + 1)$. In a case where the initial values of $x_{d6}$ and $x_{d11}$ are not the same as the initial values of the corresponding fixed bits, the generated QUBO is a function in which $F(2x_6x_{d6} - x_6 - x_{d6} + 2x_{11}x_{d11} - x_{11} - x_{d11} + 2)$ is added to $E(x) + F(x_0 + 1)$. Note that, in this case, it is assumed that F is the same value for $x_0$, $x_6$, and $x_{11}$ which are the fixed bits.

Further, in the fixed pattern p1, in a case where the initial value of $x_6$ is set to 1, the initial value of $x_{11}$ is set to 0, and the initial values of $x_{d6}$ and $x_{d11}$ are the same as the initial values of the corresponding fixed bits, $x_{d6} = 1$ and $x_{d11}$

= 0 are set. In a case where the initial values of $x_{d6}$ and $x_{d11}$ are not the same as the initial values of the corresponding fixed bits, $x_{d6} = 0$ and $x_{d11} = 1$ are set.

In the fixed pattern p2, in a case where the initial value of $x_6$ is set to 0, the initial value of $x_{11}$ is set to 1, and the initial values of $x_{d6}$ and $x_{d11}$ are the same as the initial values of the corresponding fixed bits, $x_{d6} = 0$ and $x_{d11} = 1$ are set. In a case where the initial values of $x_{d6}$ and $x_{d11}$ are not the same as the initial values of the corresponding fixed bits, $x_{d6} = 1$ and $x_{d11} = 0$ are set.

The QUBO information and the initial value as described above are output to the Ising apparatus 30, and the search processing for the fixed patterns p1 and p2 is performed simultaneously in parallel.

Also, in the information processing method according to the second embodiment as described above, the same effects as those of the information processing method according to the first embodiment may be obtained. That is, by generating the QUBO as described above, a plurality of fixed patterns may be supported by simply changing the initial values of the fixed bit and the dummy bit. Since the QUBO is generated only once, it is possible to speed up the search for the optimum solution for various fixed patterns.

Further, even when there are a plurality of fixed patterns, the number of types of the QUBO information to be sent to the Ising apparatus 30 is one. Therefore, by supplying a plurality of types of initial values of the fixed bit and the dummy bit to the Ising apparatus 30, it is possible for the Ising apparatus 30, in a case of the example of FIG. 3, to perform the parallel searches for n fixed patterns 1 to n with the one type of QUBO information. Accordingly, the solution candidates for the maximum of n fixed patterns 1 to n are obtained in one search processing of the Ising apparatus 30.

Note that, in the above description, an example in which the value of F is determined so that the value of the fixed bit does not change is described, but a semi-fixed bit may also be realized by making the value of F relatively small.

Further, as described above, the above-described processing contents may be realized by causing the information processing apparatus 20 to execute a program.

The program may be recorded on a computer-readable recording medium (for example, the recording medium 26a). As the recording medium, for example, a magnetic disk, an optical disk, a magneto-optical disk, a semiconductor memory, and the like may be used. The magnetic disk includes an FD and an HDD. The optical disk includes a CD, a CD-recordable (R)/rewritable (RW), a DVD, and a DVD-R/RW. The program may be recorded and distributed on a portable recording medium. In that case, the program may be copied from the portable recording medium to another recording medium (such as the HDD 23) and executed.

Although aspects of the information processing method, the information processing apparatus, and the program of the present disclosure have been described thus far based on the embodiments, these are merely examples and are not limited to the above description.

**Claims**

1. An information processing method comprising:

   generating a second state variable, based on fixed portion information indicating a first state variable among a plurality of state variables included in a first evaluation function representative of energy of an Ising model;
   generating a second evaluation function by adding, to the first evaluation function, a function that includes the first state variable and the second state variable, becomes a constant value when the first state variable changes from a first initial value, and becomes 0 when the first state variable does not change from the first initial value; and
   outputting information on the second evaluation function, the first initial value, and a second initial value of the second state variable.

2. The information processing method according to claim 1, wherein the second state variable is not included in the plurality of state variables.

3. The information processing method according to claim 1,
   wherein the outputting outputs the information, the first initial value, and a second initial value of the second state variable to an Ising apparatus, the Ising apparatus receiving a plurality of patterns different from each other as the first initial values and performing processing of searching for the optimum solution for each of the plurality of patterns in parallel.

4. The information processing method according to claim 3, further comprising:

   selecting a solution from among one or more solution candidates for each of the plurality pattens based on the energy, the one or more solution candidates being output by the Ising apparatus; and

outputting the selected solution.

5.  The information processing method according to any one of claims 1 to 4,
    wherein the constant value is a value equal to or larger than a sum obtained by adding a sum of absolute values of weight coefficients indicative of a magnitude of interaction between each state variable other than the first state variable among the plurality of state variables and the first state variable, and a bias coefficient for the first state variable.

6.  An information processing apparatus comprising:

    a processor configured to generate a second state variable, based on fixed portion information indicating a first state variable among a plurality of state variables included in a first evaluation function representative of energy of an Ising model, and to generate a second evaluation function by adding, to the first evaluation function, a function that includes the first state variable and the second state variable, becomes a constant value when the first state variable changes from a first initial value, and becomes 0 when the first state variable does not change from the first initial value; and
    an outputting unit configured to output information on the second evaluation function, the first initial value, and a second initial value of the second state variable.

7.  The information processing apparatus according to claim 6, wherein the second state variable is not included in the plurality of state variables.

8.  The information processing apparatus according to claim 6,
    wherein the outputting unit outputs the information, the first initial value, and a second initial value of the second state variable to an Ising apparatus, the Ising apparatus receiving a plurality of patterns different from each other as the first initial values and performing processing of searching for the optimum solution for each of the plurality of patterns in parallel.

9.  The information processing apparatus according to claim 8,
    wherein the processor selects a solution from among one or more solution candidates for each of the plurality pattens based on the energy, the one or more solution candidates being output by the Ising apparatus, and outputs the selected solution.

10. The information processing apparatus according to claim 6, wherein the constant value is a value equal to or larger than a sum obtained by adding a sum of absolute values of weight coefficients indicative of a magnitude of interaction between each state variable other than the first state variable among the plurality of state variables and the first state variable, and a bias coefficient for the first state variable.

11. An information processing program comprising:

    generating a second state variable, based on fixed portion information indicating a first state variable among a plurality of state variables included in a first evaluation function representative of energy of an Ising model;
    generating a second evaluation function by adding, to the first evaluation function, a function that includes the first state variable and the second state variable, becomes a constant value when the first state variable changes from a first initial value, and becomes 0 when the first state variable does not change from the first initial value; and
    outputting information on the second evaluation function, the first initial value, and a second initial value of the second state variable.

# FIG. 1

S1
ACQUIRE FIXED PORTION INFORMATION

S2
GENERATE DUMMY BIT

S3
GENERATE EVALUATION FUNCTION (QUBO)

S4
SET INITIAL VALUE

S5
OUTPUT INFORMATION TO ISING APPARATUS

FIXED BIT

DUMMY BIT

QUBO
WHEN INITIAL VALUES OF $x_i$ AND $x_d$ ARE SAME
$$E(x)' = E(x) + F(-2x_i x_d + x_i + x_d)$$
WHEN INITIAL VALUES OF $x_i$ AND $x_d$ ARE NOT SAME
$$E(x)' = E(x) + F(2x_i x_d - x_i - x_d + 1)$$

10

11
INFORMATION PROCESSING APPARATUS

11a
STORAGE UNIT

11b
PROCESSING UNIT

11c
OUTPUT UNIT

12
ISING APPARATUS

# FIG. 2

INFORMATION PROCESSING APPARATUS — 20

| 21 | CPU |
| --- | --- |

| 22 | RAM |
| --- | --- |

| 23 | HDD |
| --- | --- |

| 28 | INTERFACE |
| --- | --- |

BUS

| 24 | IMAGE SIGNAL PROCESSING UNIT | — 24a |
| --- | --- | --- |

| 25 | INPUT SIGNAL PROCESSING UNIT | — 25a |
| --- | --- | --- |

| 26 | MEDIUM READER | — 26a |
| --- | --- | --- |

| 27 | COMMUNICATION INTERFACE | — 27a NETWORK |
| --- | --- | --- |

30 — ISING APPARATUS

# FIG. 3

# FIG. 4

$$W_{11} \ W_{12} \ W_{13} \ W_{14} \cdots W_{1N}$$

$$W_{21} \ W_{22} \ W_{23} \ W_{24} \cdots W_{2N}$$

$$W_{31} \ W_{32} \ W_{33} \ W_{34} \cdots W_{3N}$$

$$W_{41} \ W_{42} \ W_{43} \ W_{44} \cdots W_{4N}$$

$$\vdots \quad \vdots \quad \vdots \quad \vdots \quad \vdots$$

$$W_{N1} \ W_{N2} \ W_{N3} \ W_{N4} \cdots W_{NN}$$

$$F \geqq \sum_{j=1} |W_{3j}| + b_3$$

# FIG. 5

START

ACQUIRE INFORMATION — S10

FORMULATION — S11

GENERATE DUMMY BIT — S12

GENERATE QUBO — S13

SET INITIAL VALUE — S14

OUTPUT INFORMATION TO ISING APPARATUS — S15

INPUT SOLUTION CANDIDATE — S16

S17

HAVE SEARCHES FOR ALL FIXED PATTERNS ENDED?

NO

YES

SELECT SOLUTION — S18

OUTPUT SOLUTION — S19

END

# FIG. 6

|  |  | 0 | 1 | 2 | 3 | 4 |
|---|---|---|---|---|---|---|
| VISITING CITY | 0 | $x_0$ | $x_1$ | $x_2$ | $x_3$ | $x_4$ |
|  | 1 | $x_5$ | $x_6$ | $x_7$ | $x_8$ | $x_9$ |
|  | 2 | $x_{10}$ | $x_{11}$ | $x_{12}$ | $x_{13}$ | $x_{14}$ |
|  | 3 | $x_{15}$ | $x_{16}$ | $x_{17}$ | $x_{18}$ | $x_{19}$ |
|  | 4 | $x_{20}$ | $x_{21}$ | $x_{22}$ | $x_{23}$ | $x_{24}$ |

VISITING ORDER

# FIG. 7

| VISITING CITY | 0 | $x_0=1$ | $x_1$ | $x_2$ | $x_3$ | $x_4$ |
|---|---|---|---|---|---|---|
| | 1 | $x_5$ | $x_6=1(p1)$ $=0(p2)$ | $x_7$ | $x_8$ | $x_9$ |
| | 2 | $x_{10}$ | $x_{11}=1(p2)$ $=0(p1)$ | $x_{12}$ | $x_{13}$ | $x_{14}$ |
| | 3 | $x_{15}$ | $x_{16}$ | $x_{17}$ | $x_{18}$ | $x_{19}$ |
| | 4 | $x_{20}$ | $x_{21}$ | $x_{22}$ | $x_{23}$ | $x_{24}$ |
| | | 0 | 1 | 2 | 3 | 4 |
| | | VISITING ORDER | | | | |

Europäisches
Patentamt

European
Patent Office

Office européen
des brevets

**EUROPEAN SEARCH REPORT**

Application Number

EP 20 21 4575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/391807 A1 (INAGAKI KAZUHISA [JP] ET AL) 26 December 2019 (2019-12-26) * figures 1, 23 * * paragraph [0042] - paragraph [0081] * * paragraph [0240] - paragraph [0246] * ----- | 1-11 | INV. G06N5/00 G06N10/00 G06Q10/04 |

TECHNICAL FIELDS
SEARCHED       (IPC)

G06N
G06Q

The present search report has been drawn up for all claims

| Place of search | Date of completion of the search | Examiner |
|---|---|---|
| The Hague | 25 May 2021 | Bohn, Patrice |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

....................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 20 21 4575

This annex lists the patent family members relating to the patent documents cited in  the above-mentioned European search report.
The members are as contained in the European Patent Office EDP file on
The European Patent Office is in no way liable for these particulars which are merely given for the purpose of information.

25-05-2021

| Patent document cited in search report | Publication date | Patent family member(s) | Publication date |
|---|---|---|---|
| US 2019391807 A1 | 26-12-2019 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018206127 A
- WO 2017017807 A
- JP 2016531343 A